# EUROPEAN PATENT APPLICATION

(11) **EP 4 682 920 A1**
(43) Date of publication of application: **21.01.2026**
(21) Application number: 24189426.0
(22) Date of filing: 18.07.2024
(51) Int. Cl.: H01H 9/04, H02B 1/28

(54) **WATERPROOF CASE FOR ELECTRICAL CIRCUITS AND SYSTEMS**

(71) Applicant: Metatron S.r.l., 03024 Ceprano (FR) (IT)
(72) Inventor: PANICCIA, Filippo, 03024 Ceprano (FR) (IT)
(74) Representative: Fiammenghi, Eva

(57) **Abstract**

Waterproof case for electrical circuits and systems adapted to protect the contained electrical circuits from any infiltration which could damage said circuits by oxidizing or burning them; said case being adapted to be used for the protection of switches, consoles, and commands of all types, on board boats and ships, which are subjected to constant changes in temperature, saltiness and humidity; said case being made by means of a monolithic structure, welded to the hull or to the structure of the boat, so as to obtain an IP68 insulation certification, useful for protecting said electrical circuits from the infiltration of dust or water, also following constant and permanent immersion in water; said monolithic structure being made of a piezoelectric material, adapted to elastically deform once subjected to an electric voltage, so as to allow a very simple and intuitive control of the commands and circuits, exploiting the "touch-screen" effect.

## Description

### Field of the invention

The invention refers to an innovative waterproof case, adapted to insulate the electrical circuits contained inside from external agents which could compromise the integrity of said circuits. Said case, more in particular, has an insulation rating of IP68, given by the direct welding between its monolithic structure and the structure of the boat's hull.

### Prior art

Boats are subjected to very particular environments: a microcosm which requires, from the point of view of the electrical systems, many precautions. A boat can be assimilated to a houseboat with all its needs, its critical issues and its structural obligations; it can be provided with services, emergency and safety systems, given the risk of damage due to any contact of these systems with water.

The technical reference for the creation of electrical systems on board is constituted by Technical Committee CEI Standards 18, "Electrical systems of mobile and fixed offshore units" and in particular by the standards corresponding to the series EN 60092.

Standard CEI 18-56 "Electrical systems on board ships includes a Part 507: Pleasure craft," corresponding to international standard EN 60092-507, which specifies the requirements for the design, construction and installation of electrical systems for pleasure craft sailing in inland waters and at sea.

The Standard applies to electrical systems which are:
- single-phase alternating current at a nominal voltage not exceeding 250 V;
- three-phase alternating current at a nominal voltage not exceeding 500 V;
- in direct current at a nominal voltage not exceeding 50 V.

The regulatory need for specific requirements for electrical systems on board boats derives from the particularities of the environments and applications of the electrical systems to which the standard refers, for example significant consequences of a fire, electrical risk, environmental influences and particularly severe mechanical stresses.

The electrical energy on board is generally provided by a generator or batteries with sufficient capacity to simultaneously power multiple essential services.

In principle, during normal operation, the electrical components should be capable of operating, as designed, under maximum inclination and maximum pitch conditions for all boats with roll up to ± 22.50° and pitch ± 7.50°, while for sailing boats only with a constant inclination of ± 45°.

However, in the current state of the art, most of the switches and on-board controls are easily subject to infiltrations of water, salt and dust; such external agents can easily corrode electrical circuits, causing short circuits and fires.

There is currently no provision for the use of an airtight case adapted to ensure the operation of the switches, while limiting the entry of humidity inside the protected circuits.

Such an aspect is making the maintenance of boats and ships very expensive, given the quantity of components which require constant replacement or a simple inspection, causing the partial dismantling of the ship.

Not even utility model CN213662059, published on July 9, 2021, solves the aforesaid problems as it describes a flexible printed circuit equipped with an upper protective layer, adapted to safeguard the integrity of the electrical circuit, without in any way limiting external infiltrations, which over time will in any case affect said printed circuit, causing irreparable damage.

The object of the present patent application is therefore to prevent the infiltration of humidity, dust and salt, limiting the deterioration of the electrical circuits and systems of the boats protected by the waterproof case which is the subject matter of the invention, welded directly to the hull or to structures.

### Description of the invention

According to the present invention, a waterproof case for electrical circuits and systems is created which effectively solves the above problems.

The waterproof case for electrical circuits which is the subject matter of the invention is adapted to be installed on any type of vessel, boat or ship, so as to protect those electrical circuits adapted to manage the on-board utilities.

A piezoelectric monolithic structure is therefore adapted to ensure the management of utilities through the user's touching a touch-screen, exploiting the elastic deformation of the monolithic structure, when subjected to an electrical voltage.

By welding said structure directly to the hull of the boat, the electrical circuits contained inside are sealed and thus protected from saltiness and humidity, obtaining an advantageous protection from overheating which is generally caused by oxidation and thus by short circuits. The present waterproof case obtains an insulation level of IP68, useful for preserving said electrical circuits, limiting the replacement thereof, as well as ensuring the reliability required for boats which spend months on the open sea.

The monolithic structure is therefore adapted to be superimposed on the electrical circuits of the controls and switches of any boat or ship, protecting them from external agents; said structure is made with a piezoelectric material, adapted to transmit the user's touch to the internal circuit, ensuring a control of the on-board utilities by exploiting the touch-screen effect; said monolithic structure is welded onto the structure of the boat or ship, in order to seal the contents thereof.

By way of non-limiting example, said touch made by the user on the monolithic structure, to regulate the on-board utilities and manage the commands, can be used to regulate brightness, splitting the operation of each on-board utility or command by exploiting the dragging of the user's finger, said case thus revealing itself to be a voltage regulator, surpassing the old switches with ON/OFF control only.

In an embodiment thereof, said monolithic structure adapted to protect the electrical circuits of the controls and switches of any boat or ship is made with a sheet of aluminum, having a thickness which varies in a range from 0.3 to 0.5 millimeters, ensuring robustness but at the same time the flexibility necessary to transmit the user's touch to the circuits.

Alternatively, the monolithic structure is made of wood, using a panel having a thickness of at least 2 millimeters, deformed to allow an adequate installation thereof.

A plurality of engravings, comprised on said monolithic structure, are adapted to highlight the presence of a plurality of buttons, which identify a precise function carried out by said internally guarded electrical circuits; said buttons are adapted to be backlit, exploiting the emission of a LED light, visible thanks to the transparency obtained by the thinning caused by the engraving on said structure.

Said buttons, by way of non-limiting example, obtained through the incisions in the piezoelectric material, are further painted, so as to allow a rapid and intuitive use of the case which is the subject matter of the invention. Alternatively, said buttons are adapted to be highlighted through the use of a plurality of previously printed stickers, adapted to facilitate the use of the present case.

On said monolithic structure, the creation of at least a window is envisaged, created by exploiting the thinning of the structure, with the aim of allowing the display of an alarm light which is adapted to signal the overheating of the electrical circuits comprised inside said waterproof case, through the use of a plurality of temperature sensors.

Said temperature sensors are installed below the electrical circuit, as far away as possible from the monolithic structure to avoid reading the surface temperature increase caused by sunlight; said temperature sensors area adapted to send an alarm signal to the user, by means of said alarm light, identifying a critical increase in temperature inside the case, which may cause irreversible damage to the electrical circuits.

At least a protective cover is engaged on said structure by means of a joint, so as to limit the involuntary actuation of the circuits and commands connected to the buttons of the present case; said cover is easily removable thanks to the presence of a plurality of reliefs adapted to facilitate the friction between said cover and the user's fingers, allowing the overturning of said cover, constrained only on one of its four edges.

In an embodiment, said cover comprises, on its external surface, a heat-insulating membrane adapted to limit overheating caused by sunlight in the middle of summer, when the boat is moored at anchor.

The advantages offered by the present invention are evident in the light of the description presented thus far and will be even clearer thanks to the attached figures and the detailed description.

### Description of the figures

The invention will be described hereinafter in at least a preferred embodiment by way of non-limiting example with the aid of the appended figures, in which:

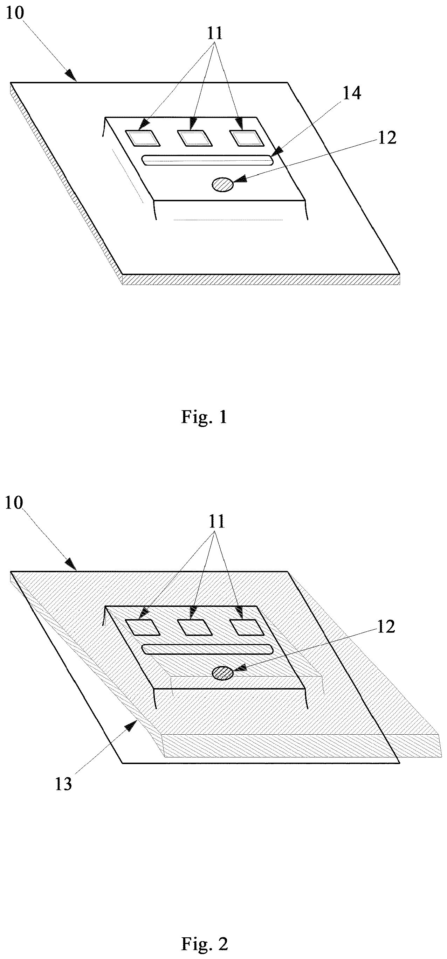

- FIGURE 1 shows the upper perspective view of the waterproof case subject matter of the invention, adapted to house the plurality of electrical circuits necessary for the operation of the on-board utilities and controls therein. Said case comprises a monolithic structure 10, adapted to be welded directly to the hull or to structures of the boat, so as to seal the circuits with an IP68 degree of insulation. Said monolithic structure 10 comprises engravings, adapted to highlight the presence of a plurality of buttons 11, which allow the control and management of utilities, exploiting the piezoelectric material with which said monolithic structure 10 is made. In fact, piezoelectricity ensures a slight deformation of the material when the latter is subjected to an electrical voltage. A sliding bar 14 is adapted to facilitate voltage regulation along the lighting system, allowing the user to split the current supply within each circuit. Finally, on said monolithic structure 10 there is a window 12, adapted to allow the display of an alarm light which is adapted to communicate, if turned on, that the internal temperature of said case has exceeded the permitted limits; in such a case the internally installed temperature sensors recommend stopping the system or circuit, interrupting the operation thereof through the present case.
- FIGURE 2 shows the perspective view of the same case shown in figure 1, with the addition of a cover 13 adapted to limit the involuntary actuation of the controls connected to said buttons 11. Said cover 13 is constrained with only one of its edges to said monolithic structure 10, so as to allow the overturning of said cover 13 during the use of said waterproof case for electrical circuits and systems.

### Detailed description of the invention

The present invention will now be illustrated by way of a purely non-limiting or binding example, resorting to the figures which illustrate some embodiments with respect to the present inventive concept.

FIG. 1 illustrates the waterproof case adapted to protect the electrical circuits from saltiness and humidity, using a monolithic structure 10 welded directly to the hull of the boat or to its main structures, eliminating the risk of infiltrations.

Said monolithic structure 10 has piezoelectric properties, adapted to allow an elastic deformation when said structure 10 is subjected to an electric voltage.

A plurality of materials can be used to make said monolithic structure 10, as long as the relative thicknesses are adapted, allowing a slight deformation of the structure 10 during the user's touch.

In fact, the user is adapted to control the on-board commands, through the use of a plurality of buttons 11, obtained by engraving said monolithic structure 10, obtaining a thinning which allows a backlighting; in fact, said backlighting is provided by the vision of LED lights, through said thinning.

A sliding bar 14 is adapted to allow a regulation of the voltage on the systems connected to said case, favoring the modulation of the current supplied to the on-board systems.

Finally, on said monolithic structure 10 there is a window 12, obtained from a second thinning resulting from incision, with the aim of increasing the transparency of the material.

Said window 12 is adapted to allow the passage of light coming from an alarm light, connected to a plurality of temperature sensors; such temperature sensors are installed as far away as possible from said monolithic structure 10, so as to be conditioned by the surface temperature of the case.

Said temperature sensors have the purpose of monitoring the temperature of the electrical circuit contained therein, notifying any anomalies through the emission of an emergency light, visible through said window 12.

FIG. 2 shows the upper perspective view of said waterproof case, which is constrained, on only one of its four side edges, with a protective cover 13.

Said cover 13 can be made of transparent plastic material, and has the sole purpose of protecting the buttons 11 from involuntary touches by the user during maneuvering, where precision can be fundamental.

Said cover 13, when placed on said case, is adapted to limit the overheating of the buttons 11 and of the monolithic structure 10, through the use of a plurality of heat-insulating membranes, further safeguarding the aesthetics of the material used to make said monolithic structure 10, often subject to long periods of exposure to the sun.

Finally, it is clear that modifications, additions or variations that are obvious to a person skilled in the art can be made to the invention described so far, without thereby departing from the scope of protection provided by the attached claims.

## Claims

1. Waterproof case for electrical circuits and systems **characterized in that** it protects the contained electrical circuits from any infiltration that could damage said circuits by oxidizing or burning them; said case being suitable for being used for the protection of switches, consoles, and commands of all types, on board boats and ships, which are subjected to constant changes in temperature, saltiness and humidity; said case being made by means of a monolithic structure (10), welded to the hull or to the structure of the boat, in order to obtain an IP68 insulation certification, useful for protecting said electrical circuits from the infiltration of dust or water, also following constant and permanent immersion in water; said monolithic structure (10) being made of a piezoelectric material, able to deform elastically once subjected to an electric voltage, in order to allow a very simple and intuitive control of the commands and circuits, exploiting the "touch-screen" effect; said waterproof case for electrical circuits and systems comprising:
- at least a monolithic structure (10), able to be superimposed on the electric circuits of the controls and switches of any boat or ship, protecting them from external agents; said monolithic structure (10) being made with a piezoelectric material, capable of transmitting the user's touch to the internal circuit, in order to provide control of the on-board utilities by exploiting the "touch-screen" effect; said monolithic structure (10) being welded onto the structure of the boat or ship, in order to seal its contents;
- a plurality of engravings, included on said monolithic structure (10), able to highlight the presence of a plurality of buttons (11), which identify a precise function performed by said internally guarded electric circuits; said buttons (11) being capable of being backlit, exploiting the emission of a LED light, visible thanks to the transparency obtained by thinning the engraving shown on said monolithic structure (10);
- at least a window (12), made on said monolithic structure (10) by exploiting a second thinning of the structure (10), able to allow the display of an alarm light able to signal, through the use of a plurality of temperature, the overheating of the electric circuits included inside said waterproof case;
- a plurality of temperature sensors, installed below the electric circuit but as far away as possible from the monolithic structure (10) to avoid reading the surface temperature increase caused by sunlight; said temperature sensors being capable of sending an alarm signal to the user, via said alarm light, identifying a critical increase in temperature inside the case, which may cause irreversible damage to the electric circuits;
- at least a protective cover (13), engaged on said monolithic structure (10) by means of a joint, able to limit the involuntary actuation of the circuits and commands connected to the buttons (11) of the present case; said cover (13) being easily removable thanks to the presence of a plurality of reliefs suitable for facilitating the friction between said cover (13) and the user's fingers, allowing the overturning of said cover (13), constrained only on one of the its four edges.

2. Waterproof case for electrical circuits and systems, according to the preceding claim 1, **characterized in that** said monolithic structure (10), suitable for protecting the electrical circuits of the controls and switches of any boat or ship, is made with a sheet of aluminum, having a thickness that varies in a range from 0.3 to 0.5 millimeters, ensuring robustness but at the same time the flexibility necessary to transmit the user's touch to the circuits.

3. Waterproof case for electrical circuits and systems, according to the preceding claim 1, **characterized in that** said monolithic structure (10) is made of wood, using a panel having a thickness of at least 2 millimeters.

4. Waterproof case for electrical circuits and systems, according to any one of the preceding claims, **characterized in that** the touch made by the user on said monolithic structure (10), to adjust the on-board utilities and manage the commands, can be used to adjust the brightness, dividing the operation of each user or on-board command; said case thus revealing itself as a voltage regulator, through the use of a sliding bar (14);

5. Waterproof case for electrical circuits and systems, according to any one of the preceding claims, **characterized in that** said buttons (11), obtained through the incisions of the piezoelectric material, are further painted, in order to allow rapid and intuitive use of the case object of invention.

6. Waterproof case for electrical circuits and systems, according to any one of the preceding claims from 1 to 4, **characterized in that** said buttons (11) are suitable for being highlighted through the use of a plurality of previously printed stickers, suitable for facilitate the use of this case.

7. Waterproof case for electrical circuits and systems, according to any one of the preceding claims, **characterized in that** said cover (13), capable of limiting the involuntary actuation of the on-board controls, comprises on its external surface a heat-insulating membrane, capable of limit overheating caused by sunlight in the middle of summer, when the boat is
